(19) Europäisches Patentamt
European Patent Office
Office européen des brevets

(11) **EP 4 640 354 A1**

(12) **EUROPEAN PATENT APPLICATION**
published in accordance with Art. 153(4) EPC

(43) Date of publication:
**29.10.2025 Bulletin 2025/44**

(21) Application number: **23906922.2**

(22) Date of filing: **15.12.2023**

(51) International Patent Classification (IPC):
**B23K 1/19** (2006.01)      **B23K 1/00** (2006.01)
**B23K 3/04** (2006.01)      **B23K 35/30** (2006.01)
**C22C 9/01** (2006.01)      **C22C 9/05** (2006.01)
**C22C 9/10** (2006.01)

(52) Cooperative Patent Classification (CPC):
**B23K 1/00; B23K 1/19; B23K 3/04; B23K 35/30;
C22C 9/01; C22C 9/05; C22C 9/10**

(86) International application number:
**PCT/JP2023/045043**

(87) International publication number:
**WO 2024/135560 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 JP 2022206635**

(71) Applicant: NIPPON STEEL CORPORATION
**Chiyoda-ku
Tokyo 100-8071 (JP)**

(72) Inventors:
• **FURUSAKO, Seiji**
  **Tokyo 100-8071 (JP)**
• **KODAMA, Shinji**
  **Tokyo 100-8071 (JP)**
• **ISHIDA, Yoshinari**
  **Tokyo 100-8071 (JP)**
• **MATSUBA, Masahiro**
  **Tokyo 100-8071 (JP)**

(74) Representative: **Vossius & Partner
Patentanwälte Rechtsanwälte mbB
Siebertstrasse 3
81675 München (DE)**

(54) **BRAZED LAP JOINT, METHOD FOR PRODUCING BRAZED LAP JOINT, AND AUTOMOTIVE COMPONENT**

(57)      A brazed lap joint according to an aspect of the present invention includes: a first steel sheet and a second steel sheet, the first steel sheet and the second steel sheet being stacked; a zinc-based-plated layer, the zinc-based-plated layer being an overlapping surface of the first steel sheet and the second steel sheet; and a brazed zone including a brazing metal joining an end surface of the first steel sheet and a surface of the second steel sheet, and a heat-affected zone around the brazing metal, in which a concentration of B atoms at a prior austenite grain boundary of the second steel sheet excluding the brazed zone is 2.0 atm% or more, an average effective grain size of the second steel sheet excluding the brazed zone is 7.0 μm or less, an average effective grain size of the second steel sheet in a root portion, a toe portion, and a middle portion between the root portion and the toe portion is 15.0 μm or less, a Vickers hardness of the brazing metal is 250 or less, and a leg length of the brazed lap joint on the second steel sheet side is 2.0 mm or more.

FIG. 1

**Description**

TECHNICAL FIELD

The present invention relates to a brazed lap joint, a method for manufacturing a brazed lap joint, and a vehicle component.

Priority is claimed on Japanese Patent Application No. 2022-206635, filed December 23, 2022, the content of which is incorporated herein by reference.

BACKGROUND ART

A lap joint is required to have a sufficient joining strength and corrosion resistance. One technique for improving the corrosion resistance of the lap joint is a zinc-based-plated layer. A zinc-based-plated layer has a function of dramatically improving corrosion resistance of a steel material by a sacrificial anticorrosion effect. Therefore, the zinc-based-plated layer is used as a surface treatment layer of various steel materials.

For example, Patent Document 1 discloses a Zn-Al-Mg-based plated steel sheet having a tensile strength of 590 MPa or more and a yield ratio of less than 0.7, in which a base steel sheet contains, by mass%, C: 0.05 to 0.25%, Si: 1.5% or less, Mn: 1 to 2%, N: 0.005% or less, Ti: $3.43 \times N$ to 0.05%, B: 0.0003 to 0.01%, Cr: 0.5 to 2%, and as necessary, one or more of Nb: 0.3% or less, V: 1% or less, Mo: 1% or less, and Zr: 1% or less with the balance being Fe and inevitable impurities, and has a composition of $Mn + 1.29Cr \geq 2.05$, the base steel sheet includes a ferrite + 5 vol% or more martensite, and Mn segregation of the base steel sheet is in a range satisfying Mn maximum concentration (mass%)/Mn minimum concentration (mass%) $\leq 2$.

Patent Document 2 discloses a hot-dip galvanized steel sheet including a hot-dip galvanized layer on at least one surface of a base steel sheet, in which the base steel sheet has a predetermined composition and contains, in volume fraction, ferrite: 0% to 50%, residual austenite: 0% to 30%, tempered martensite: 5% or more, fresh martensite: 0% to 10%, and a total of pearlite and cementite: 0% to 5%, a remainder in microstructure is composed of bainite when the remainder in microstructure is present, a concentration of B atoms at a prior austenite grain boundary is 2.0 atm% or more, and an average effective grain size is 7.0 μm or less.

Patent Document 3 discloses a high strength steel sheet containing C, Si, Mn, P, S, Al, and N, having a composition in which [%Si], [%Mn], [%P], [%Mo], and [%Cr] satisfy a predetermined relationship, with the balance being Fe and inevitable impurities, having ferrite, tempered martensite, bainite, quenched martensite, and residual austenite, having a steel structure in which an amount of diffusible hydrogen in the steel sheet is 0.60 ppm by mass or less, a surface layer softening thickness is 5 μm or more and 150 μm or less, and a frequency of coincidence grain boundaries in the surface layer of the steel sheet after a high-temperature tensile test is 0.45 or less, and having a tensile strength of 1180 MPa or more.

Patent Document 4 discloses a spot welding member obtained by performing spot welding on a plurality of steel sheets in which at least one of the plurality of steel sheets is a high-strength cold-rolled steel sheet having no plated layer on a surface and having a tensile strength of 780 MPa or more, at least one of the plurality of steel sheets is a zinc-based-plated steel sheet having a zinc-based-plated layer on a surface, and a surface layer Zn concentration inside a corona bond of a spot-welding portion is 1 mass% or more and less than 25 mass%.

Citation List

Patent Documents

Patent Document 1: Japanese Unexamined Patent Application, First Publication No. 2009-228079
Patent Document 2: PCT International Publication No. WO 2020/162561
Patent Document 3: PCT International Publication No. WO 2021/019947
Patent Document 4: Japanese Unexamined Patent Application, First Publication No. 2020-179413

SUMMARY OF INVENTION

Technical Problem

Liquid metal embrittlement (LME) cracking is a problem during welding of zinc-based-plated steel sheets. Zn, which is a main component of the zinc-based-plated layer, is melted by welding heat, diffuses into the grain boundaries of the steel sheet, and embrittles the grain boundaries. Tensile stress is introduced into the weld heated by welding heat due to thermal shrinkage of the base metal and the weld metal due to temperature decrease. LME cracking is a phenomenon in which grain boundaries embrittled by molten zinc are broken by tensile stress (or tensile strain) introduced into a weld.

Even in a bare steel sheet, that is, a steel sheet having no plated layer, LME cracking may occur when the steel sheet is stacked and welded with a zinc-based-plated steel sheet. This is because when welding heat is applied to the bare steel sheet in a state where the zinc-based-plated layer is in contact with the bare steel sheet, molten zinc diffuses into grain boundaries of the bare steel sheet. In Patent Document 4, LME cracking occurring in a steel sheet having no zinc-based-plated layer is referred to as "extrinsic LME cracking".

According to the Zn-Al-Mg-based steel sheet disclosed in Patent Document 1, it is considered that molten metal embrittlement cracking can be stably suppressed even under severe welding conditions. Patent Document 1 describes that B is segregated at a grain boundary to increase an interatomic bonding force, thereby suppressing molten metal embrittlement cracking. However, the grain size, the welding conditions, and the like for suppressing LME cracking are not studied at all in Patent Document 1.

According to the hot-dip galvanized steel sheet disclosed in Patent Document 2, it is considered that press formability and hydrogen embrittlement resistance after deformation processing are improved. However, in Patent Document 2, LME cracking is not studied at all.

The high strength steel sheet disclosed in Patent Document 3 is considered to have excellent LME resistance characteristics. Patent Document 3 discloses that the LME resistance characteristics are improved by controlling the frequency of coincidence grain boundaries in the surface layer of the steel sheet after the high-temperature tensile test to 0.45 or less and controlling the surface layer softening thickness to 5 $\mu$m or more and 150 $\mu$m or less. However, the grain boundary characteristics, the grain size of the weld, the welding conditions, and the like for suppressing LME cracking are not studied at all in Patent Document 3.

In the spot-welding member disclosed in Patent Document 4, it is considered that the extrinsic LME cracking can be suppressed. Patent Document 4 discloses that occurrence of extrinsic LME cracking can be suppressed by controlling the concentration of Zn on the surface layer in the corona bond of the spot-welding portion. However, Patent Document 4 does not consider LME cracking of a joint other than a spot welded joint, for example, a lap fillet joint.

In view of the above circumstances, an object of the present invention is to provide a brazed lap joint having a high joining strength and suppressed in LME cracking, a method for manufacturing the same, and a vehicle component suppressed in LME cracking. Solution to Problem

The gist of the present invention is as follows.

(1) A brazed lap joint according to an aspect of the present invention includes: a first steel sheet and a second steel sheet, the first steel sheet and the second steel sheet being stacked; a zinc-based-plated layer, the zinc-based-plated layer being an overlapping surface of the first steel sheet and the second steel sheet; and a brazed zone including a brazing metal joining an end surface of the first steel sheet and a surface of the second steel sheet, and a heat-affected zone around the brazing metal, in which a concentration of B atoms at a prior austenite grain boundary of the second steel sheet excluding the brazed zone is 2.0 atm% or more, an average effective grain size of the second steel sheet excluding the brazed zone is 7.0 $\mu$m or less, an average effective grain size of the second steel sheet in a root portion, a toe portion, and a middle portion between the root portion and the toe portion is 15.0 $\mu$m or less, a Vickers hardness of the brazing metal is 250 or less, and a leg length of the brazed lap joint on the second steel sheet side is 2.0 mm or more.
(2) Preferably, in the brazed lap joint described in (1), a tensile strength of the second steel sheet is 980 MPa or more.
(3) A method for manufacturing a brazed lap joint according to another aspect of the present invention is a method for manufacturing a lap joint in which a zinc-based-plated layer is present on an overlapping surface and an end surface of a first steel sheet and a surface of a second steel sheet are brazed, the method including: bringing a metal platen whose inside is cooled by cooling water into close contact with the second steel sheet; and performing brazing using, as a filler metal, a brazing wire containing Cu as a main component and having a diameter of 0.8 to 1.4 mm, so that an amount of brazing heat input Q calculated by the following formula becomes 190 to 270 J/mm:

$$Q = V \times I/v$$

where V is a voltage in units of V, I is a current in units of A, and v is a brazing rate in units of mm/s, wherein a concentration of B atoms at a prior austenite grain boundary of the second steel sheet is 2.0 atm% or more, and an average effective grain size of the second steel sheet is 7.0 $\mu$m or less,.
(4) Preferably, in the method for manufacturing a brazed lap joint described in (3), a tensile strength of the second steel sheet is 980 MPa or more.
(5) Preferably, in the method for manufacturing a brazed lap joint described in (3) or (4), the brazing is MIG brazing.
(6) A vehicle component according to another aspect of the present invention includes the brazed lap joint described in (1) or (2).

Advantageous Effects of Invention

According to the present invention, it is possible to provide a brazed lap joint having a high joining strength and suppressed in LME cracking, a method for manufacturing the same, and a vehicle component suppressed in LME cracking.

BRIEF DESCRIPTION OF DRAWINGS

FIG. 1 is a schematic view of a cross section of a brazed lap joint according to an aspect of the present invention perpendicular to an end surface of a first steel sheet and perpendicular to a surface of a second steel sheet (that is, a cross section perpendicular to a brazing direction).
FIG. 2 is an enlarged schematic view of a cross section of a root portion perpendicular to the end surface of the first steel sheet and perpendicular to the surface of the second steel sheet.
FIG. 3 is an enlarged schematic view of a cross section of a toe portion perpendicular to the end surface of the first steel sheet and perpendicular to the surface of the second steel sheet.
FIG. 4 is an enlarged schematic view of a cross section of a middle portion between the root portion and the toe portion perpendicular to the end surface of the first steel sheet and perpendicular to the surface of the second steel sheet.
FIG. 5 is a cross-sectional photograph for explaining a leg length.
FIG. 6 is a photograph of B atoms enriched at a prior austenite grain boundary in a heat-affected zone, obtained by SIMS analysis.

DESCRIPTION OF EMBODIMENTS

(1. Brazed lap joint 1)

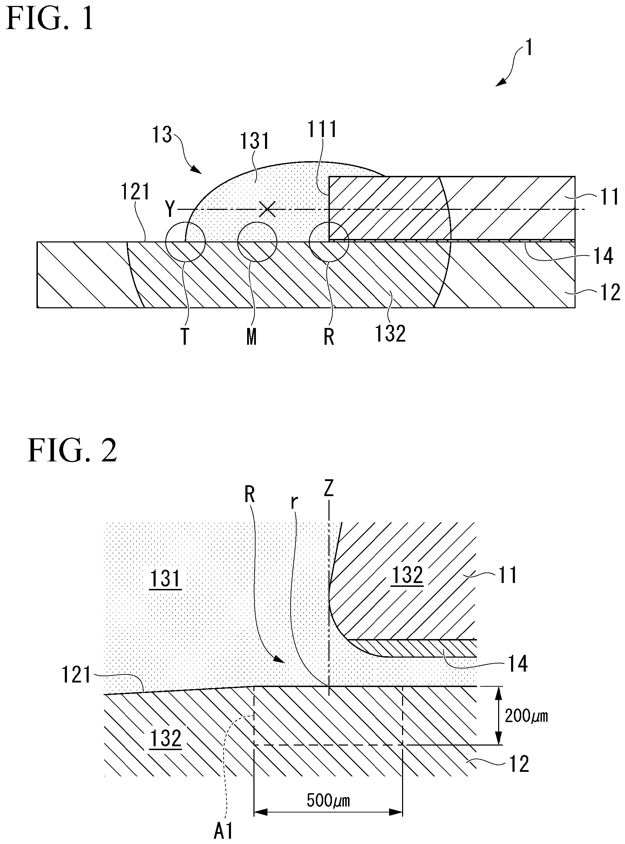

As illustrated in FIG. 1, a brazed lap joint 1 according to a first embodiment of the present invention includes: a first steel sheet 11 and a second steel sheet 12, the first steel sheet and the second steel sheet being stacked; a zinc-based-plated layer 14, the zinc-based-plated layer being an overlapping surface of the first steel sheet 11 and the second steel sheet 12; and a brazed zone 13 including a brazing metal 131 joining an end surface 111 of the first steel sheet 11 and a surface 121 of the second steel sheet 12, and a heat-affected zone 132 around the brazing metal 131, in which a concentration of B atoms at a prior austenite grain boundary of the second steel sheet 12 excluding the brazed zone 13 is 2.0 atm% or more, an average effective grain size of the second steel sheet 12 excluding the brazed zone 13 is 7.0 $\mu$m or less, an average effective grain size of the second steel sheet 12 in a root portion R, a toe portion T, and a middle portion M between the root portion R and the toe portion T is 15.0 $\mu$m or less, a Vickers hardness of the brazing metal 131 is 250 or less, and a leg length L of the brazed lap joint 1 on the second steel sheet 12 side is 2.0 mm or more.

(First steel sheet 11, second steel sheet 12, and brazed zone 13)

In the brazed lap joint 1 according to the first embodiment, as illustrated in FIG. 1, the first steel sheet 11 and the second steel sheet 12 are stacked. The end surface 111 of the first steel sheet and the surface 121 of the second steel sheet are joined by the brazing metal 131. For example, a fillet brazed lap joint, a plug brazed lap joint, and the like have such a constitution.
The lap joint is a joint in which parts are placed in parallel with each other at an angle of $0° \le \alpha \le 5°$ and overlap each other as defined in JIS Z 3000-1:2018 "Welding and allied processes-Vocabulary-Part 1: General". As defined in JIS Z 3000-3:2018 "Welding and allied processes-Vocabulary-Part 3: Soldering and brazing", brazing is a joining method in which a base metal is joined using brazing having a melting point of 450°C or higher without melting the base metal as much as possible and is also referred to as brazing. The fillet brazing is fillet welding performed by brazing. The fillet welding is welding having a triangular cross section between members without providing a groove in a lap joint, a T joint, a corner joint, and the like as defined in JIS Z 3000-1:2018 "Welding and allied processes-Vocabulary-Part 1: General". The plug brazing is plug welding performed by brazing. The plug welding is welding performed in a hole made in one of the stacked base metals as defined in JIS Z 3000-1:2018 "Welding and allied processes-Vocabulary-Part 1: General".
In general lap fillet welding, a steel sheet plate provided with a weld metal on an end surface is disposed on an upper side, and a steel sheet provided with a weld metal on a surface is disposed on a lower side in many cases. Therefore, the steel sheet provided with the weld metal on the end surface may be referred to as an "upper sheet", and the steel sheet provided with the weld metal on the surface may be referred to as a "lower sheet". In the brazed lap joint 1 according to the first embodiment, the first steel sheet 11 provided with the brazing metal 131 on the end surface 111 corresponds to the upper sheet, and the second steel sheet 12 provided with the brazing metal 131 on the surface 121 corresponds to the lower sheet.

The brazing metal 131 is a portion formed by melting and then solidifying a filler metal such as a filler wire for brazing. The brazing metal 131 is formed by, for example, brazing such as MIG brazing or MAG brazing. In the brazed lap joint 1 according to the first embodiment, the base metal refers to the first steel sheet 11 and the second steel sheet 12. As illustrated in FIG. 1 and the like, it is preferable that the first steel sheet 11 and the second steel sheet 12 are not melted by brazing as much as possible. However, as illustrated in FIG. 2, the first steel sheet 11 and the second steel sheet 12 may be slightly melted, and the brazing metal 131 may be dissolved in the first steel sheet 11 and the second steel sheet 12.

The heat-affected zone 132 is formed around the brazing metal 131. In other words, in the first steel sheet 11 and the second steel sheet 12, a region around the brazing metal 131 is the heat-affected zone 132. The heat-affected zone 132 is a portion of a base metal that is not melted and has a microstructure, a metallurgical property, a mechanical property, and the like changed by heat during brazing. The heat-affected zone 132 can be easily identified by etching a cross section of the brazed zone 13. The brazed zone 13 is a generic term for portions including the brazing metal 131 and the heat-affected zone 132.

(Zinc-based-plated layer 14)

The zinc-based-plated layer 14 is provided on the surface of one or both of the first steel sheet 11 and the second steel sheet 12. The zinc-based-plated layer 14 is a plated layer containing zinc as a main component. For example, a plated layer having a zinc content of 50 mass% or more corresponds to plating containing zinc as a main component. Examples of the zinc-based-plated layer 14 include pure galvanizing layer, hot-dip galvanizing layer, electro-galvanizing layer, and alloying hot-dip galvanizing layer. The zinc-based-plated layer 14 has a function of enhancing corrosion resistance of the brazed lap joint 1 by a sacrificial anticorrosion effect.

The zinc-based-plated layer 14 is disposed at least on the overlapping surface of the first steel sheet 11 and the second steel sheet 12. That is, at least one of the first steel sheet 11 and the second steel sheet 12 is a base steel sheet portion of a zinc-based-plated steel sheet, and the first steel sheet 11 and the second steel sheet 12 are stacked such that the zinc-based-plated layer 14 is positioned on the overlapping surface. In the brazed lap joint 1 illustrated in FIG. 1, the zinc-based-plated layer 14 is provided on one surface of the first steel sheet 11, but the zinc-based-plated layer 14 may be provided on both surfaces of the first steel sheet 11. The zinc-based-plated layer 14 may be provided on one surface or both surfaces of the second steel sheet 12, and the first steel sheet 11 and the second steel sheet 12 may be stacked such that the zinc-based-plated layer 14 is positioned on the overlapping surface.

The zinc-based-plated layer 14 disposed on the overlapping surface of the lap joint may cause LME cracking in the steel sheet. LME cracking is particularly likely to occur in a steel sheet whose surface is joined with another steel sheet, that is, the second steel sheet 12.

(Concentration of B atoms at prior austenite grain boundary of second steel sheet 12 excluding brazed zone 13)

As described above, in the second steel sheet 12, a region around the brazing metal 131 is the heat-affected zone 132. Therefore, a part of the second steel sheet 12 is included in the brazed zone 13, and its microstructure, metallurgical property, mechanical property, and the like are different from those before brazing. On the other hand, the microstructure, metallurgical property, mechanical property, and the like in a region outside the brazed zone 13 in the second steel sheet 12 (that is, the second steel sheet 12 excluding the heat-affected zone 132) are substantially the same as those before welding. In the present embodiment, the region outside the brazed zone 13 may be referred to as a base material portion.

In the base material portion of the second steel sheet 12, the concentration of B atoms at the prior austenite grain boundary is 2.0 atm% or more. That is, the concentration of B atoms at the prior austenite grain boundary of the second steel sheet 12 excluding the brazed zone 13 is 2.0 atm% or more. The concentration of B atoms at the prior austenite grain boundary of the second steel sheet 12 excluding the brazed zone 13 is more preferably 2.2 atm% or more, 2.5 atm% or more, or 3.0 atm% or more. In the second steel sheet 12 excluding the brazed zone 13, the upper limit of the concentration of B atoms at the prior austenite grain boundary is not particularly limited. From the viewpoint of preventing excessive curing of the second steel sheet 12, for example, the B atomic concentration is more preferably 7.0 atm% or less, 6.0 atm% or less, or 5.0 atm% or less. The concentration of B atoms at the prior austenite grain boundary of the second steel sheet 12 excluding the brazed zone 13 can be specified by a STEM-EELS method described later.

The prior austenite grain boundary is a trace of a grain boundary of austenite which is a high-temperature microstructure. The second steel sheet 12 is once heated to an austenite temperature range in the manufacturing process thereof, and is cooled to room temperature after the metallographic structure thereof is transferred into mainly austenitic. Some or all of austenite is transformed into a microstructure such as martensite and disappears by cooling, but grain boundaries of austenite grains remain in the second steel sheet 12 after the microstructure transformation. This remaining grain boundary is referred to as a prior austenite grain boundary. Molten zinc is likely to diffuse into the prior austenite grain boundary. Therefore, the prior austenite grain boundary is a region where LME cracking is likely to occur.

(Average effective grain size of second steel sheet 12 excluding brazed zone 13)

The average effective grain size in the base material portion of the second steel sheet 12 is 7.0 $\mu$m or less. That is, the average effective grain size of the second steel sheet 12 excluding the brazed zone 13 is 7.0 $\mu$m or less. This improves hydrogen embrittlement of the second steel sheet 12 and improves delayed fracture resistance property of the brazed lap joint 1. The average effective grain size is an average grain size of grains when a region surrounded by a grain boundary having an orientation difference of 15 degrees or more is defined as a grain. The average effective grain size of the second steel sheet 12 excluding the brazed zone 13 can be specified using EBSD described later.

The average effective grain size of the second steel sheet 12 excluding the brazed zone 13 is more preferably 6.5 $\mu$m or less, 6.0 $\mu$m or less, 5.5 $\mu$m or less, or 5.0 $\mu$m or less. The lower limit of the average effective grain size of the second steel sheet 12 excluding the brazed zone 13 is not particularly limited. From the viewpoint of enhancing the production efficiency of the second steel sheet 12, the average effective grain size is preferably 2.0 $\mu$m or more, 2.5 $\mu$m or more, or 3.0 $\mu$m or more.

The type of the grains is not particularly limited. As described later, what affects LME cracking resistance is not the type of grains but the amount of grain boundaries (that is, the total length of the grain boundaries). The grains are, for example, ferrite, martensite, residual austenite, and the like.

(Average effective grain size of second steel sheet 12 in root portion R, toe portion T, and middle portion M between root portion and toe portion)

In the brazed lap joint 1 according to the first embodiment, the average effective grain size of the second steel sheet 12 in the root portion R, the toe portion T, and the middle portion M between the root portion and the toe portion is also defined. The average effective grain size of the second steel sheet 12 in the root portion R, the toe portion T, and the middle portion M can also be specified using EBSD described later.

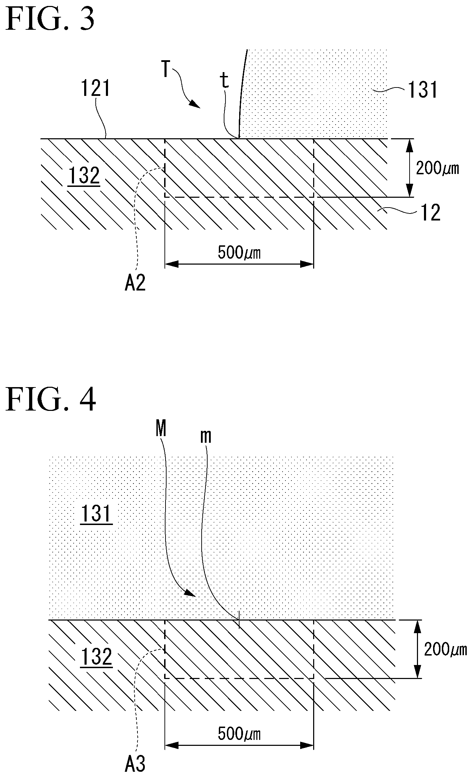

The root portion R is a region near a root r of the brazed lap joint 1. The root r is an intersection point of the end surface 111 of the first steel sheet and the surface 121 of the second steel sheet which are joined to each other by the brazing metal 131. When there is a gap between the first steel sheet 11 and the second steel sheet 12 near the lower end of the end surface 111 of the first steel sheet, an intersection point between a straight line perpendicular to the surface 121 of the second steel sheet and in contact with the end surface 111 of the first steel and the surface 121 of the second steel sheet is regarded as the root r. For example, in the enlarged cross-sectional view of the root portion R illustrated in FIG. 2, an intersection point between a broken line Z and the surface 121 of the second steel sheet is the root r, and the periphery thereof is the root portion R. The toe portion T is a region near a toe t of the brazed lap joint 1. As illustrated in FIG. 3, the toe t is a point at which the surface 121 of the second steel sheet intersects the surface of the brazing metal 131. As illustrated in FIG. 4, the middle portion M between the root portion and the toe portion (hereinafter, simply referred to as "middle portion M") is a region near a midpoint m between the root and the toe of the brazed lap joint 1.

All of the root portion R, the toe portion T, and the middle portion M are regions where stress is likely to concentrate in the process of cooling the brazed lap joint 1 after the end of brazing. Therefore, the root portion R, the toe portion T, and the middle portion M are portions where LME cracking is likely to occur. In the brazed lap joint 1 according to the first embodiment, the average effective grain size of the second steel sheet 12 in the root portion R, the toe portion T, and the middle portion M is 15.0 $\mu$m or less. The average effective grain size of the second steel sheet 12 in the root portion R, the toe portion T, and the middle portion M is more preferably 13.0 $\mu$m or less, 11.0 $\mu$m or less, 10.0 $\mu$m or less, or 9.0 $\mu$m or less. The lower limit of the average effective grain size of the second steel sheet 12 in the root portion R, the toe portion T, and the middle portion M is not particularly limited, but from the viewpoint of enhancing the production efficiency of the brazed lap joint 1, the average effective grain size is preferably 6.0 $\mu$m or more, 7.0 $\mu$m or more, or 8.0 $\mu$m or more.

(Vickers hardness of brazing metal 131)

In the brazed lap joint 1 according to the first embodiment, the Vickers hardness of the brazing metal 131 is 250 or less. The Vickers hardness of the brazing metal 131 may be 240 or less, 220 or less, or 200 or less. The lower limit of the Vickers hardness of the brazing metal 131 is not particularly limited, but the Vickers hardness of the brazing metal 131 may be 100 or more, 120 or more, or 140 or more from the viewpoint of increasing the joining strength of the brazed lap joint 1. The Vickers hardness of the brazing metal 131 can be specified by a Vickers hardness test described later.

(Leg length L on second steel sheet 12 side)

The leg length L of the brazed lap joint 1 on the second steel sheet 12 side is 2.0 mm or more. The leg length L on the second steel sheet 12 side may be 2.5 mm or more, 3.0 mm or more, or 3.5 mm or more.

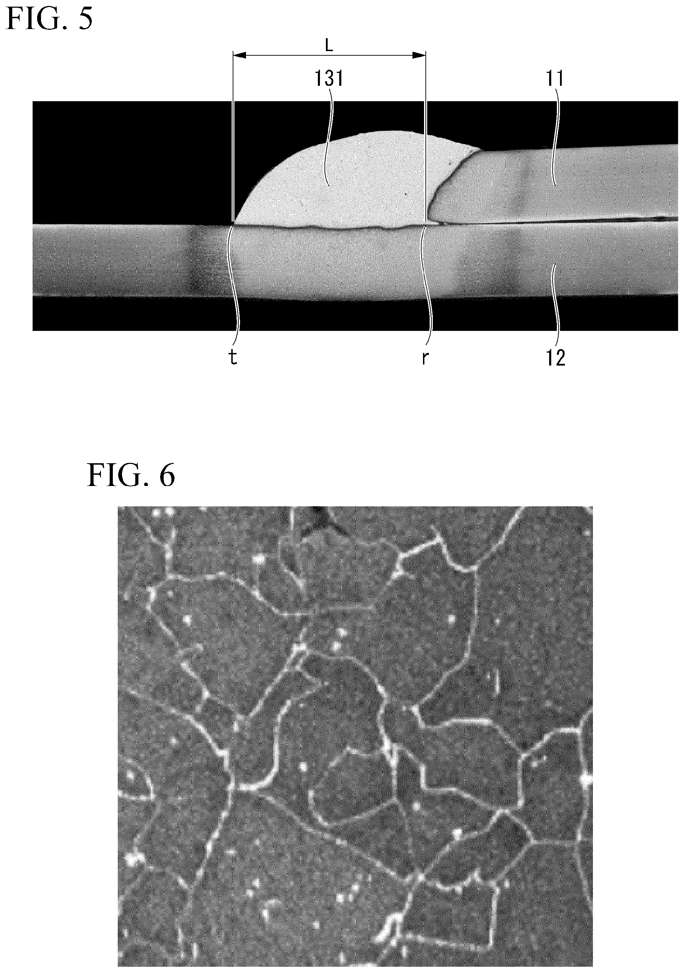

Here, the "leg length" is defined as the distance from the root of the joint to the toe of fillet welding in JIS Z 3001-1:2018. Specifically, as shown in FIG. 5, the leg length L on the second steel sheet 12 side is the interval between the root r and the toe t as measured along the direction perpendicular to the end surface 111 of the first steel sheet in the cross section of the brazed zone. The cross section for measuring the leg length is perpendicular to the end surface 111 of the first steel sheet 11 and perpendicular to the surface 121 of the second steel sheet 12.

(Operation and effects)

The LME cracking of the steel sheet occurs when a tensile stress is applied to the steel sheet in a state where molten zinc is present on the surface of the steel sheet. In the process of cooling the brazed lap joint 1 after brazing, tensile stress is likely to be applied to the root portion R, the toe portion T, and the middle portion M of the second steel sheet 12. In the brazed lap joint 1 according to the first embodiment, since the zinc-based-plated layer 14 is provided on the overlapping surface of the second steel sheet 12, molten zinc exists on the surface 121 of the second steel sheet in the process of cooling the brazed lap joint 1 after brazing. Therefore, the brazed lap joint 1 according to the first embodiment includes an occurrence factor of LME cracking.

However, in the brazed lap joint 1 according to the first embodiment, the Vickers hardness of the brazing metal 131 is suppressed to 250 or less. Therefore, when the brazing metal 131 is cooled after brazing, the stress introduced by the brazing metal 131 into the root portion R, the toe portion T, and the middle portion M of the second steel sheet 12 is reduced.

In the brazed lap joint 1 according to the first embodiment, the average effective grain size of the second steel sheet 12 excluding the brazed zone is 7.0 μm or less. That is, the average effective grain size of the second steel sheet 12 before brazing is 7.0 μm or less. As a result, the average effective grain size of the second steel sheet 12 in the root portion R, the toe portion T, and the middle portion M can be 15.0 μm or less. By receiving the brazing heat input, the grains of the heat-affected zone of the second steel sheet 12 grow. The average effective grain size of the heat-affected zone after brazing is a value corresponding to the brazing heat input and the average effective grain size before brazing. By reducing the average effective grain size before brazing, coarsening of the grain size in the heat-affected zone (particularly, the root portion R, the toe portion T, and the middle portion M) after brazing can be suppressed.

By reducing the average effective grain size of the root portion R, the toe portion T, and the middle portion M, the amount of grain boundaries in the root portion R, the toe portion T, and the middle portion M can be increased, and the LME sensitivity of the root portion R, the toe portion T, and the middle portion M can be reduced. By increasing the amount of grain boundaries, the concentration of zinc entering the grain boundaries is diluted, and embrittlement of the grain boundaries is suppressed.

In the brazed lap joint 1 according to the first embodiment, the concentration of B atoms at the prior austenite grain boundary of the second steel sheet 12 excluding the brazed zone is 2.0 atm% or more. The B atoms segregated at the prior austenite grain boundary increase the peel strength of the prior austenite grain boundary. As shown in FIG. 6, B atoms have a property of being concentrated at the prior austenite grain boundaries in the heat-affected zone 132. Therefore, the concentration of B atoms at the prior austenite grain boundary of the toe portion T, the root portion R, and the middle portion M of the second steel sheet 12 is still higher than that of the base material portion. The LME sensitivity is further reduced in the toe portion T, the root portion R, and the middle portion M of the second steel sheet 12.

In the brazed lap joint 1 according to the first embodiment, the leg length L on the second steel sheet 12 side is 2.0 mm or more. This can increase the tensile shear strength of the brazed lap joint 1. For example, when a shear tensile test is performed on a test piece having a parallel portion width of 45 mm in the brazed lap joint 1 according to the first embodiment, the tensile shear strength TSS can be 11.25 kN or more (that is, 0.25 kN/mm or more).

For the above reasons, in the brazed lap joint 1 according to the first embodiment, the LME cracking is strongly suppressed although the LME cracking occurrence factor exists. The zinc-based-plated layer serves as an occurrence factor of LME cracking, and has various operation and effects such as a dramatical increase in corrosion resistance of the brazed lap joint 1. The brazed lap joint 1 according to the first embodiment has a high joining strength. According to the brazed lap joint 1 according to the first embodiment, it is possible to improve the reliability of a joined joint having the zinc-based-plated layer and to expand the application range.

The most basic aspect of the brazed lap joint 1 according to the first embodiment has been described above. Next, a more preferable aspect of the brazed lap joint 1 according to the first embodiment will be described.

(Upper limit of leg length L on second steel sheet 12 side)

By reducing the amount of heat input during brazing and reducing the leg length L on the second steel sheet 12 side, coarsening of the grain size of the heat-affected zone can be further suppressed. Therefore, the leg length L on the second steel sheet 12 side may be 6.0 mm or less, 5.8 mm or less, or 5.0 mm or less.

(Leg length on first steel sheet 11 side)

The leg length on the first steel sheet 11 side is preferably 1.0 mm or more, and may be 1.3 mm or more, 1.5 mm or more, or 2.0 mm or more. Here, the leg length on the first steel sheet 11 side is the interval between the root r and the toe on the end surface 111 of the first steel sheet 11 when the toe is on the end surface 111 of the first steel sheet 11. When the brazing metal 131 covers the entire end surface 111 of the first steel sheet 11 and the end surface 111 of the first steel sheet 11 has no toe, the leg length on the first steel sheet 11 side is set to an interval between the surface of the first steel sheet 11 (the surface on the side farther from the surface 121 of the second steel sheet 12) and the surface 121 of the second steel sheet 12 for convenience. That is, the absolute maximum value of the leg length on the first steel sheet 11 side is the interval between the surface of the first steel sheet 11 (the surface on the side farther from the surface 121 of the second steel sheet 12) and the surface 121 of the second steel sheet 12. This interval is the same as the sheet thickness of the first steel sheet 11 when there is no gap between the first steel sheet 11 and the second steel sheet 12 near the lower end of the end surface 111 of the first steel sheet. In order to improve the joining strength (joint strength), it is preferable that the brazing metal 131 covers the entire end surface 111 of the first steel sheet 11, that is, the leg length on the first steel sheet 11 side is the absolute maximum value.

(Tensile strength of steel sheet)

One or both of the first steel sheet 11 and the second steel sheet 12 are preferably high strength steel sheets having a tensile strength of 980 MPa or more, 1000 MPa or more, 1100 MPa or more, or 1300 MPa or more. This increases the strength of the brazed lap joint 1. The higher the tensile strength of the steel sheet, the higher the LME sensitivity of the steel sheet. However, in the brazed lap joint 1 according to the first embodiment, LME cracking is suppressed by setting the hardness of the brazing metal 131, the average effective grain size of the toe portion T, the root portion R, and the middle portion M of the second steel sheet 12, and the B atomic concentration at the prior austenite grain boundary of the second steel sheet 12 within appropriate ranges. Therefore, even when the tensile strength of the first steel sheet 11 and/or the second steel sheet 12 is improved, LME cracking does not become a problem. The second steel sheet 12, which is the lower sheet, tends to have LME cracking more easily than the first steel sheet 11. When the second steel sheet 12 is a high strength steel sheet, the brazed lap joint 1 according to the first embodiment has further superiority over a conventional brazed lap joint 1 or weld joint.

The sheet thicknesses of the first steel sheet 11 and the second steel sheet 12 are not necessarily limited, but may be, for example, 0.8 to 3.2 mm. If necessary, the lower limit of the first steel sheet 11 may be 1.0 mm, 1.2 mm, or 1.6 mm, and the upper limit thereof may be 3.2 mm, 3.0 mm, 2.8 mm, 2.6 mm, 2.3 mm, or 2.0 mm. Similarly, the lower limit of the second steel sheet 12 may be 1.0 mm, 1.2 mm, or 1.6 mm, and the upper limit thereof may be 3.2 mm, 3.0 mm, 2.8 mm, 2.6 mm, 2.3 mm, or 2.0 mm.

(2. Method for manufacturing brazed lap joint 1)

A method for manufacturing a brazed lap joint 1 according to a second embodiment of the present invention is a method for manufacturing a lap joint 1 in which a zinc-based-plated layer 14 is present on an overlapping surface and an end surface 111 of a first steel sheet 11 and a surface 121 of a second steel sheet 12 are brazed, the method including: bringing a metal platen whose inside is cooled by cooling water into close contact with the second steel sheet 12; and performing brazing using, as a filler metal, a brazing wire containing Cu as a main component and having a diameter of 0.8 to 1.4 mm, so that an amount of brazing heat input Q calculated by the following formula becomes 190 to 270 J/mm:

$$Q = V \times I/v$$

where V is a voltage in units of V, I is a current in units of A, and v is a brazing rate in units of mm/s, in which a concentration of B atoms at a prior austenite grain boundary of the second steel sheet 12 is 2.0 atm% or more, and an average effective grain size of the second steel sheet 12 is 7.0 $\mu$m or less.

(First steel sheet 11, second steel sheet 12, and zinc-based-plated layer 14)

At the time of brazing, the zinc-based-plated layer 14 is disposed at least on the overlapping surface of the first steel sheet 11 and the second steel sheet 12. Therefore, one or both of the first steel sheet 11 and the second steel sheet 12 have the zinc-based-plated layer 14 on the surface. In the second steel sheet 12, the concentration of B atoms at the prior austenite grain boundary is 2.0 atm% or more, and the average effective grain size is 7.0 $\mu$m or less. The constitutions and the positional relationship of the first steel sheet 11, the second steel sheet 12, and the zinc-based-plated layer 14 are similar to those of the brazed lap joint 1 according to the first embodiment. The preferred aspect exemplified in the description of the brazed lap joint 1 according to the first embodiment can also be adopted for the first steel sheet 11, the second steel sheet 12, and the zinc-based-plated layer 14 in the method for manufacturing the brazed lap joint 1 according to the second embodiment.

(Brazing)

The method for manufacturing the brazed lap joint 1 according to the second embodiment includes brazing the end surface 111 of the first steel sheet and the surface 121 of the second steel sheet that are stacked. Thus, the brazing metal 131 joining the end surface 111 of the first steel sheet and the surface 121 of the second steel sheet is formed.
As described above, brazing is a joining method in which a base metal is not melted as much as possible using a wax (filler metal) having a melting point of 450°C or higher. Preferably, brazing is performed while shielding the wire electrode and a brazing portion 13 with an inert gas. A preferred example of brazing is MIG brazing. MIG brazing is obtained by diverting a shield mechanism in MIG welding defined in JIS Z 3001-7:2018 "Welding and allied processes-Vocabulary-Part 7: Arc welding" to brazing. Specifically, MIG brazing is brazing performed while shielding the brazed zone using an inert gas (shielding gas) such as Ar. According to MIG brazing, a brazed lap joint having favorable mechanical properties is obtained. On the other hand, from the viewpoint of welding cost, the brazing may be MAG brazing. MAG brazing is obtained by diverting a shield mechanism in MAG welding defined in JIS Z 3001-7:2018 "Welding and allied processes-Vocabulary-Part 7: Arc welding" to brazing. Specifically, MAG brazing is brazing performed while shielding the brazed zone using an activated gas obtained by mixing an inert gas with an $O_2$ gas and a $CO_2$ gas. The brazing may be, for example, lap fillet brazing or plug brazing.

(Brazing conditions)

In brazing, the amount of brazing heat input Q is set to 190 to 270 J/ mm. The amount of brazing heat input Q is a value obtained by the following formula, and the unit is J/mm.

$$Q = V \times I/v$$

The meanings of the symbols included in the above formula are as follows.

V: voltage of brazing (unit: V)
I: current of brazing (unit: A)
v: brazing rate (unit: mm/s)

The brazing rate is a speed at which a torch for brazing is moved. The amount of brazing heat input Q may be 200 J/mm or more, 210 J/mm or more, or 230 J/mm or more. The amount of brazing heat input Q may be 260 J/mm or less, 250 J/mm or less, or 240 J/mm or less.
When the amount of brazing heat input Q exceeds the above range, the second steel sheet 12 to be the lower steel sheet in normal brazing is melted. In a case where the rear surface of the lower steel sheet is a zinc-plated steel sheet, when penetration of the lower steel sheet becomes large, LME cracking may occur not only at the root, the toe, and the middle portion thereof but also on the rear surface side of the lower steel sheet. On the other hand, when the amount of brazing heat input Q is less than 190 kJ/mm, the leg length is small, and the tensile shear strength decreases.
The brazing is performed in a state where the second steel sheet 12 is brought into close contact with a metal platen. For example, the second steel sheet 12 can be brought into close contact with a metal platen by making the surface shape of the platen flat, removing foreign matters such as dust from the surface of the platen, and then placing a flat second steel sheet on the platen.
A flow passage through which cooling water can flow is provided inside the platen. At the time of brazing, cooling water is circulated through the flow passage to cool the inside of the platen. By using a platen, a temperature rise of the second steel sheet 12 is suppressed during brazing, and coarsening of the grain size in the heat-affected zone is prevented. For example, a copper plate whose inside is water-cooled may be used as a platen.

(Composition of filler metal)

In brazing, a brazing wire containing Cu as a main component and having a diameter of 0.8 to 1.4 mm is used. The wire containing Cu as a main component is, for example, a wire in which the content of Cu is 50 mass% or more. The Cu content of the brazing wire may be 70 mass% or more, 80 mass% or more, or 90 mass% or more. Specific examples of the wire containing Cu as a main component include a Cu-7% Al wire. According to such a wire, the Vickers hardness of the brazing metal 131 can be set to 250 or less.

(Operation and effects)

In the method for manufacturing the brazed lap joint 1 according to the present embodiment, in the second steel sheet 12 to be subjected to brazing, the concentration of B atoms at the prior austenite grain boundary is 2.0 atm% or more. The B enrichment at the prior austenite grain boundary is promoted in the heat-affected zone 132 of the brazed zone 13 by the heat input at the time of brazing. As described with respect to the weld joint according to the first embodiment, the B atoms segregated at the prior austenite grain boundary increase the peel strength of the prior austenite grain boundary. As a result, the LME sensitivity is reduced in the toe portion T, the root portion R, and the middle portion M of the second steel sheet 12.

In the method for manufacturing the brazed lap joint 1 according to the present embodiment, the amount of brazing heat input Q is 190 J/mm or more. As a result, the leg length L on the second steel sheet 12 side can be secured, and the joining strength of the brazed lap joint 1 can be increased.

In the method for manufacturing the brazed lap joint 1 according to the present embodiment, the average effective grain size of the second steel sheet 12 before brazing is 7.0 $\mu$m or less, and the amount of brazing heat input Q is suppressed to 270 J/mm or less. In the method for manufacturing the brazed lap joint 1, the second steel sheet is brought into close contact with a metal platen whose inside is cooled. The average effective grain size of the heat-affected zone after brazing is a value corresponding to the brazing heat input and the average effective grain size before brazing. By reducing the average effective grain size before brazing and reducing the brazing heat input, enlargement of grains in the heat-affected zone 132 is suppressed. By reducing the average effective grain size of the steel sheet, the amount of grain boundaries of the steel sheet can be increased and the LME sensitivity of the steel sheet can be further reduced. By increasing the amount of grain boundaries, the concentration of zinc entering the grain boundaries is diluted, and embrittlement of the grain boundaries is suppressed.

The most basic aspect of the method for manufacturing the brazed lap joint 1 according to the second embodiment has been described above. Next, a more preferable aspect of the method for manufacturing the brazed lap joint 1 according to the second embodiment will be described.

(Composition of filler metal)

The chemical component of the brazing wire containing Cu as a main component contains, for example, in unit mass%, Al: 0 to 30%, Si: 0 to 20%, and Mn: 0 to 10%, with the balance including Cu and impurities. The impurity means, for example, a raw material such as ore or scrap, or a component mixed due to various factors of a manufacture step when a brazing wire is industrially manufactured and is acceptable within a range not adversely affecting the brazing metal 131. As a specific method for selecting the filler metal, for example, a preliminary test may be performed to select a wire having a Cu content of 50% or more, which allows the Vickers hardness of the brazing metal 131 to be 250 or less.

In MIG brazing, the first steel sheet 11 and the second steel sheet 12, which are base metals, may be slightly melted and melted into the brazing metal 131. Components derived from these steel sheets become impurities of the brazing metal 131. Therefore, the chemical component of the brazing wire and the chemical component of the brazing metal 131 may not match each other. However, according to the above-described amount of brazing heat input, the melting amounts of the first steel sheet 11 and the second steel sheet 12 are small, and these components do not excessively increase the hardness of the brazing metal 131.

(Tensile strength of steel sheet)

One or both of the first steel sheet 11 and the second steel sheet 12 are preferably high strength steel sheets having a tensile strength of 980 MPa or more, 1000 MPa or more, 1100 MPa or more or 1300 MPa or more. This increases the strength of the brazed lap joint 1. When the second steel sheet 12 is a high strength steel sheet, the method for manufacturing the brazed lap joint 1 according to the second embodiment has further superiority over a conventional method for manufacturing a joint.

(3. Vehicle component)

A vehicle component according to a third embodiment of the present invention includes the brazed lap joint 1 according to the first embodiment. Therefore, in the vehicle component according to the third embodiment, although high corrosion resistance is brought about by the zinc-based-plated layer 14, LME cracking is suppressed. The vehicle component is, for example, a center pillar.

(Other embodiments)

Although embodiments of the present invention have been described above, the present invention is not limited thereto, and can be appropriately modified without departing from the technical idea of the invention. Hereinafter, modification examples of the present invention are described. Unless otherwise specified, aspects described below are applicable to all of the first embodiment, the second embodiment, and the third embodiment.

(Feeding speed of filler metal)

The feeding speed of the filler metal is not particularly limited, but the feeding speed of the filler metal is preferably in a range of 3 to 6 m/min from the viewpoint of further improving the stability of brazing. By setting the feeding speed of the filler metal to 6 m/min or less with respect to brazing heat input, melting of the filler metal can be promoted, and brazing defects can be further suppressed. On the other hand, by setting the feeding speed of the filler metal to 3 m/min or more with respect to brazing heat input, the amount of the brazing metal 131 is increased, and a joining failure can be further suppressed. In normal brazing, the voltage and current are determined so as to achieve a set feeding speed.

(Chemical component of brazing metal 131)

The chemical component of the brazing metal 131 is not particularly limited as long as the hardness of the brazing metal 131 can be within the above-described range. The brazing metal 131 preferably contains, for example, Cu as a main component. An example of the chemical component of the brazing metal 131 containing Cu as a main component contains, in unit mass%, Al: 0 to 30%, Si: 0 to 20%, and Mn: 0 to 10%, with the balance being Cu and impurities. The impurities are mixed into the wax in the process of manufacturing the filler metal to be the material of the brazing metal 131. The first steel sheet 11 and the second steel sheet 12 may be melted and mixed into the brazing metal 131. Components derived from the steel sheet are also considered as impurities in the chemical components of the brazing metal 131. For example, by performing MIG brazing using a Cu-7% Al wire as a filler metal, the brazing metal 131 having the above-described chemical components is obtained.

(Chemical component and metallographic structure of first steel sheet 11 and second steel sheet 12)

In the brazed lap joint 1 according to the present embodiment, the average effective grain size of the lower sheet in which LME cracking is likely to occur, that is, the second steel sheet 12, and the B concentration of the prior austenite grain boundary are defined. As long as these elements are within the above-described ranges, the chemical component, the metallographic structure, and the like of the second steel sheet 12 are not particularly limited. The chemical component and metallographic structure of the first steel sheet 11 are also not particularly limited. For example, a base steel sheet of a hot-dip galvanized steel sheet disclosed in Patent Document 2 (PCT International Publication No. WO 2020/162561) can be suitably used as the first steel sheet 11 and the second steel sheet 12 of the brazed lap joint 1 according to the present embodiment.

(Measurement method)

The concentration of B atoms at the prior austenite grain boundary of the second steel sheet 12 at the outside of the brazed zone 13 is determined by the STEM-EELS method. Specifically, for example, it is determined by a method disclosed in METALLURGICAL AND MATERIALS TRANSACTIONS A: vol. 45A, p. 1877 to 1888. First, a sample is collected with a cross section of the second steel sheet 12 at the outside of the brazed zone 13 as an observed section, and the observed section is mechanically polished to be a mirror surface, and then electrolytic polishing is performed. The cross section is perpendicular to the end surface of the first steel sheet and perpendicular to the surface of the second steel sheet. Next, in one or a plurality of observed visual fields in a range of 1/8 thickness to 3/8 thickness centered on 1/4 thickness from the surface in the observed section, the crystal structure and orientation of a total area of $2.0 \times 10^{-9}$ m$^2$ or more are analyzed by the SEM-EBSD method to identify the prior austenite grain boundary. Next, a region including the prior austenite grain boundary is extracted by FIB processing in the SEM. Thereafter, the film is thinned to about 70 nm using Ar ion milling or the like. For the thinned test piece, the concentration of B atoms is linearly analyzed by electron energy-loss spectroscopy (EELS) along a line crossing the prior austenite grain boundary by aberration correction STEM. The scanning step at the time of line analysis is 0.1 nm. Since B atoms segregate at the prior austenite grain boundary, the absolute maximum value of the concentration of B atoms obtained is regarded as the concentration of B atoms at the prior austenite grain boundary. The number of measurements is three, and the average value of the measurement results is taken as the concentration of B atoms.

The average effective grain size of the second steel sheet 12 at the outside of the brazed zone 13 is evaluated by SEM-EBSD (Electron BackScatter Diffraction) method. First, a sample is collected with a cross section of the second steel sheet 12 at the outside of the brazed zone 13 as an observed section, and the observed section is mechanically polished to be a mirror surface, and then electrolytic polishing is performed. The cross section is perpendicular to the end surface of the first steel sheet and perpendicular to the surface of the second steel sheet. Next, in one or a plurality of observed visual fields in a range of 1/8 thickness to 3/8 thickness centered on 1/4 thickness from the surface in the observed section, the crystal structure and orientation are analyzed by the SEM-EBSD method. For analysis of data obtained by the EBSD method, "OIM Analysis 6.0" manufactured by TSL is used. The distance between marks (step) is 0.03 to 0.20 $\mu$m. A region determined to be FCC iron from the observation result is defined as residual austenite. A grain boundary map is obtained using a boundary where the crystal orientation difference is 15 degrees or more as a grain boundary. A value calculated by the following formula is taken as the average effective grain size.

[Mathematical Formula 1]

$$D = \frac{\sum_{i=1}^{N} Ai \times di}{\sum_{i=1}^{N} Ai}$$

In the formula, N represents the number of grains included in the evaluation region of the average effective grain size, Ai represents the area of the i-th (i = 1, 2, ..., N) grain, and di represents the circle equivalent diameter of the i-th grain. These data are easily obtained by EBSD analysis.

The method for measuring the average effective grain size of the second steel sheet 12 in the root portion R, the toe portion T, and the middle portion M is the same as the method for measuring the average effective grain size of the second steel sheet 12 at the outside of the brazed zone 13 except for the measurement point. The measurement is performed in a cross section of the brazed zone 13. The cross section is perpendicular to the end surface of the first steel sheet and perpendicular to the surface of the second steel sheet. As illustrated in FIG. 2, a measurement point A1 of the average effective grain size of the second steel sheet in the root portion is a rectangular region within a range of $\pm$ 250 $\mu$m in the extending direction of the surface 121 of the second steel sheet starting the root r and within a range of 200 $\mu$m in the depth direction of the second steel sheet 12 starting from the root r. As illustrated in FIG. 3, a measurement point A2 of the average effective grain size of the second steel sheet in the toe portion is a rectangular region within a range of $\pm$ 250 $\mu$m in the extending direction of the surface 121 of the second steel sheet starting the toe t and within a range of 200 $\mu$m in the depth direction of the second steel sheet 12 starting from the toe t. As illustrated in FIG. 4, a measurement point A3 of the average effective grain size of the second steel sheet in the middle portion M between the root portion and the toe portion is a rectangular region within a range of $\pm$ 250 $\mu$m in the extending direction of the surface 121 of the second steel sheet starting the midpoint m between the toe t and the root r and within a range of 200 $\mu$m in the depth direction of the second steel sheet 12 starting from the midpoint m. The average effective grain sizes of these measurement points A1, A2, and A3 (that is, the average effective grain sizes at three points of the root portion, the toe portion, and the middle portion between the root portion and the toe portion) all need to be 15.0 $\mu$m or less.

The hardness of the brazing metal 131 is determined by Vickers hardness measurement. The measurement is performed in a cross section of the brazed zone. The cross section is perpendicular to the end surface of the first steel sheet and perpendicular to the surface of the second steel sheet. The Vickers hardness test is in accordance with JIS Z 2244-1:2020. The test force is 9.807 N (that is, HV1). The number of measurements is 5. The interval between the five measurement points is 0.5 mm. The five measurement points are arranged so as to be parallel to the surface 121 of the second steel sheet and along a straight line passing through the sheet thickness center of the first steel sheet 11. For example, a broken line Y described in FIG. 1 is a straight line parallel to the surface 121 of the second steel sheet and passing through the sheet thickness center of the first steel sheet 11. The measurement point in the middle of the five measurement points is arranged at the midpoint (for example, × mark attached to FIG. 1) between the intersection point of the above-described straight line and the surface of the brazing metal 131 and the intersection point of the above-described straight line and the end surface 111 of the first steel sheet. The average value of the Vickers hardness at the five measurement points is regarded as the hardness of the brazing metal 131.

The leg length L on the second steel sheet side is determined by cross-section observation. The measurement is performed in a cross section of the brazed zone. The cross section is perpendicular to the end surface of the first steel sheet and perpendicular to the surface of the second steel sheet. The interval between the root r and the toe t illustrated in FIG. 5 may be measured by a known technique. The interval between the root r and the toe t is regarded as the leg length L on the second steel sheet side.

The chemical component of the brazing metal 131 is evaluated using EPMA. The measurement point is on a straight line (broken line Y in FIG. 1) that is parallel to the surface 121 of the second steel sheet and passes through the sheet thickness center of the first steel sheet 11, and is a midpoint (× mark attached to FIG. 1) between the intersection point of the straight line and the surface of the brazing metal 131 and the intersection point of the straight line and the end surface 111 of the first steel sheet. As a method of chemical analysis, after preparing a test piece, another method such as luminescence analysis may be used.

Examples

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

(Experiment 1)

MIG brazing was performed on the plate assemblies 1 to 15 described in Table 1 using the filler metal described in Table 2 to manufacture brazed lap joints 1 to 15. The voltage value, the current value, the brazing rate, and the brazing heat input during MIG brazing were as described in Table 3. The average effective grain size of the second steel sheet in the root portion, the toe portion, and the middle portion and the hardness of the brazing metal of the brazed lap joints 1 to 15 were measured and described in Table 4. The frequency of occurrence of LME cracking and the frequency of occurrence of hydrogen embrittlement in the brazed lap joints 1 to 15 were also investigated, and the results are described in Table 4.

In any of the steel sheets described in Table 1, the average effective grain size was 7.0 $\mu$m or less, and the concentration of B atoms at the prior austenite grain boundary was 2.0 atm% or more. The balance of the chemical component of the filler metal described in Table 2 was an impurity. In all the MIG brazing, the feeding speed of the filler metal was set within a range of 3.5 to 7.0 m/min. Values outside the appropriate range were underlined.

The method for measuring the average effective grain size of the second steel sheet in the root portion, the toe portion, and the middle portion, the hardness of the brazing metal, and the leg length on the second steel sheet side was as described above. The largest measurement result among the average effective grain sizes of the second steel sheet in the root portion, the toe portion, and the middle portion (that is, the absolute maximum value of the average effective grain size) was described in Table 4.

The frequency of occurrence of LME cracking of the brazed lap joint was evaluated by the following method. Ten brazed lap joints were prepared per condition by the above-described technique, and the cross sections of brazed zones thereof were observed to confirm the presence or absence of LME cracking. The number of brazed lap joints where LME cracking has occurred is the frequency of occurrence of LME cracking. When LME cracking did not occur in all the ten test specimens, it was determined that LME cracking was sufficiently suppressed.

The tensile shear strength of the brazed lap joint was evaluated by the following method. From the brazed lap joint 1, a shear tensile test piece in which the extending direction of the end surface 111 of the first steel sheet 11 was the test piece width (parallel part width) direction and the test piece width (parallel part width) was 45 mm was taken. The tensile load (shear tensile load) was applied in a direction in which the first steel sheet 11 and the second steel sheet 12 were separated from each other, and the tensile shear strength of the brazed lap joint was calculated from the load at the time when the test piece was fractured. A brazed lap joint having a tensile shear strength of 11.25 kN or more (that is, 0.25 kN/mm or more) was determined to have an excellent joint strength, and was described as "GOOD" in the table.

[Table 1]

| No. | Sheet thickness (mm) of first steel sheet | Sheet thickness (mm) of second steel sheet | Plating of first steel sheet | Plating of second steel sheet | Tensile strength (MPa) of first steel sheet | Tensile strength (MPa) of second steel sheet | Carbon amount (mass%) of first steel sheet | Carbon amount (mass%) of second steel sheet |
|---|---|---|---|---|---|---|---|---|
| 1 | 1.6 | 1.6 | Present | Present | 995 | 995 | 0.22 | 0.22 |
| 2 | 1.6 | 1.6 | Present | Present | 995 | 995 | 0.22 | 0.22 |
| 3 | 1.6 | 1.6 | Present | Present | 995 | 995 | 0.22 | 0.22 |
| 4 | 1.6 | 1.6 | Present | Present | 995 | 995 | 0.22 | 0.22 |
| 5 | 1.6 | 1.6 | Present | Present | 995 | 995 | 0.22 | 0.22 |
| 6 | 1.6 | 1.6 | Present | Present | 995 | 995 | 0.22 | 0.22 |
| 7 | 1.6 | 1.6 | Present | Present | 1198 | 1198 | 0.24 | 0.24 |
| 8 | 1.6 | 1.6 | Present | Present | 1198 | 1198 | 0.24 | 0.24 |
| 9 | 1.2 | 1.2 | Present | Present | 1196 | 1196 | 0.24 | 0.24 |
| 10 | 1.2 | 1.2 | Present | Present | 1196 | 1196 | 0.24 | 0.24 |
| 11 | 1.2 | 1.2 | Present | Present | 1196 | 1196 | 0.24 | 0.24 |
| 12 | 1.2 | 1.2 | Present | Present | 1196 | 1196 | 0.24 | 0.24 |
| 13 | 1.6 | 1.6 | Present | Present | 600 | 995 | 0.13 | 0.22 |
| 14 | 1.6 | 1.6 | Absent | Present | 1003 | 995 | 0.23 | 0.22 |
| 15 | 1.6 | 1.6 | Present | Absent | 995 | 1003 | 0.22 | 0.23 |

[Table 2]

| No. | Welding material | Fe | Cu | Al |
|---|---|---|---|---|
| 1 | Cu-7%Al $\varphi$1 mm | 0.4 | 93 | 6.3 |
| 2 | Cu-7%Al $\varphi$1 mm | 0.4 | 93 | 6.3 |
| 3 | Cu-7%Al $\varphi$1 mm | 0.5 | 93 | 6.2 |
| 4 | Cu-7%Al $\varphi$1 mm | 0.4 | 93 | 6.3 |
| 5 | YM24T wire for mild steel $\varphi$1 mm | 99 | 0 | 0.06 |
| 6 | YM24T wire for mild steel $\varphi$1 mm | 99 | 0 | 0.06 |
| 7 | Cu-7%Al $\varphi$1 mm | 0.4 | 93 | 6.3 |
| 8 | Cu-7%Al $\varphi$1 mm | 0.4 | 93 | 6.3 |
| 9 | Cu-7%Al $\varphi$1 mm | 0.4 | 93 | 6.3 |
| 10 | Cu-7%Al $\varphi$1 mm | 0.4 | 93 | 6.3 |
| 11 | Cu-7%Al $\varphi$1 mm | 0.5 | 93 | 6.2 |
| 12 | Cu-7%Al $\varphi$1 mm | 0.4 | 93 | 6.3 |
| 13 | Cu-7%Al $\varphi$1 mm | 0.4 | 93 | 6.3 |
| 14 | Cu-7%Al $\varphi$1 mm | 0.4 | 93 | 6.3 |
| 15 | Cu-7%Al $\varphi$1 mm | 0.4 | 93 | 6.3 |

[Table 3]

| No. | Voltage V (V) | Current I (A) | Brazing rate v (mm/s) | Amount of brazing heat input Q = V × I/v (J/mm) | Use of water-cooled copper plate |
|---|---|---|---|---|---|
| 1 | 16 | 108 | 8.33 | 207 | Present |
| 2 | 18 | 124 | 8.33 | 268 | Present |
| 3 | 20 | 130 | 8.33 | 312 | Present |
| 4 | 35 | 151 | 8.33 | 634 | Present |
| 5 | 16 | 112 | 8.33 | 215 | Present |
| 6 | 20 | 126 | 8.33 | 303 | Present |
| 7 | 16 | 110 | 8.33 | 211 | Present |
| 8 | 20 | 131 | 8.33 | 315 | Present |
| 9 | 16 | 108 | 8.33 | 207 | Present |
| 10 | 16 | 90 | 8.33 | 173 | Present |
| 11 | 22 | 125 | 8.33 | 330 | Present |
| 12 | 17 | 130 | 8.33 | 265 | Absent |
| 13 | 16 | 108 | 8.33 | 207 | Present |
| 14 | 16 | 109 | 8.33 | 209 | Present |
| 15 | 16 | 111 | 8.33 | 213 | Present |

[Table 4]

| No. | Average effective grain size (μm) of second steel sheet in root portion, toe portion, and middle portion | Hardness (Hv) of brazing metal | Leg length (mm) | Joint strength | Frequency of occurrence of LME cracking | Remark |
|---|---|---|---|---|---|---|
| 1 | 14.1 | 160 | 3.3 | GOOD | 0 | Inventive Example |
| 2 | 14.7 | 162 | 4.1 | GOOD | 0 | Inventive Example |
| 3 | 20.2 | 163 | 4.4 | GOOD | 2 | Comparative Example |
| 4 | 23.7 | 165 | 4.7 | GOOD | 4 | Comparative Example |
| 5 | 14.4 | 320 | 3.4 | GOOD | 6 | Comparative Example |
| 6 | 23.9 | 298 | 4.4 | GOOD | 7 | Comparative Example |
| 7 | 14.1 | 202 | 4.1 | GOOD | 0 | Inventive Example |
| 8 | 20.1 | 192 | 4.8 | GOOD | 3 | Comparative Example |
| 9 | 13.9 | 162 | 3.4 | GOOD | 0 | Inventive Example |
| 10 | 13.2 | 165 | 1.8 | BAD | 0 | Comparative Example |
| 11 | 26.3 | 158 | 4.6 | GOOD | 9 | Comparative Example |
| 12 | 17.2 | 160 | 3.5 | GOOD | 2 | Comparative Example |
| 13 | 14.5 | 158 | 3.4 | GOOD | 0 | Inventive Example |
| 14 | 14.7 | 163 | 3.6 | GOOD | 0 | Inventive Example |
| 15 | 14.6 | 165 | 3.7 | GOOD | 0 | Inventive Example |

In the brazed lap joints of Test Nos. 3, 4, 6, 8, and 11, the average effective grain size of the second steel sheet in the root portion, the toe portion, or the middle portion was too large. As a result, LME cracking occurred in these brazed lap joints. In Test Nos. 3, 4, 6, 8, and 11, since the amount of brazing heat input Q was excessive, it is estimated that coarsening of grains occurred.

In the brazed lap joints of Test Nos. 5 and 6, the hardness of the brazing metal was too large. As a result, LME cracking occurred in these brazed lap joints. In Test Nos. 5 and 6, since the component of the filler metal was mainly Fe, it is presumed that the hardness of the brazing metal could not be suppressed.

In the brazed lap joint of Test No. 10, the leg length was insufficient. As a result, in the brazed lap joint of Test No. 10, the joining strength was insufficient. In Test No. 10, since the amount of heat input Q was insufficient, it is estimated that a sufficient leg length could not be secured.

In the brazed lap joint of Test No. 12, the average effective grain size of the second steel sheet in the root portion, the toe portion, or the middle portion was too large. As a result, LME cracking occurred in the brazed lap joint of Test No. 12. In Test No. 12, since the second steel sheet was not cooled during brazing, it is estimated that coarsening of grains occurred.

On the other hand, in the brazed lap joint in which the amount of brazing heat input Q and the cooling conditions of the second steel sheet were appropriate, the average effective grain size of the second steel sheet in the root portion, the toe portion, and the middle portion, and the hardness of the brazing metal were within appropriate ranges, LME cracking did not occur at all.

(Supplement)

(A) A brazed joint according to another embodiment of the present invention includes: a first steel sheet and a second steel sheet, the first steel sheet and the second steel sheet being stacked; a brazing metal joining an end surface of the first steel sheet and a surface of the second steel sheet; and a brazing portion including a heat-affected zone around the brazing metal, in which one or both of the first steel sheet and the second steel sheet have a zinc-based-plated layer on surfaces thereof, the zinc-based-plated layer is disposed on a mating surface of the first steel sheet and the second steel sheet, at an outside of the brazing portion, a concentration of B atoms at a prior austenite grain boundary of the second steel sheet is 2.0 atm% or more, at the outside of the brazing portion, an average effective grain size of the second steel sheet is 7.0 $\mu$m or less, an average effective grain size of the second steel sheet in a root portion, a toe portion, and a middle portion between the root portion and the toe portion is 15.0 $\mu$m or less, a hardness of the brazing portion is HV250 or less.

(B) Preferably, in the brazed joint described in (A), a tensile strength of the second steel sheet is 980 MPa or more.

(C) A method for manufacturing a brazed joint according to another embodiment of the present invention includes brazing an end surface of a first steel sheet and a surface of a second steel sheet, the first steel sheet and the second steel sheet being stacked, to form a brazed metal, in which one or both of the first steel sheet and the second steel sheet have a zinc-based-plated layer on a surface, the zinc-based-plated layer is disposed on a mating surface of the first steel sheet and the second steel sheet, in the second steel sheet, a concentration of B atoms at a prior austenite grain boundary is 2.0 atm% or more, and an average effective grain size is 7.0 $\mu$m or less, in the brazing, an amount of brazing heat input Q as calculated by substituting a voltage value V in units of V, a current value I in units of A, and a brazing rate v in units of m/min into the following formula is set to fall within a range of 1500 to 3000 J/10 mm, and a hardness of the brazing metal is set to HV250 or less in the brazing.

$$Q = 0.6 \times V \times I/v$$

(D) Preferably, in the method for manufacturing a brazed joint described in (C), the hardness of the brazing metal is made HV250 or less by using a wire for brazing containing Cu as a main component and having a diameter of 0.8 to 1.4 mm as the filler metal.

(E) Preferably, in the method for manufacturing a brazed joint described in (C) or (D), a tensile strength of the second steel sheet is 980 MPa or more.

(F) Preferably, in the method for manufacturing a brazed joint described in any one of (C), (D), and (E), the brazing is defined as MIG brazing.

(G) A vehicle component according to another embodiment of the present invention includes the brazed joint described in (A) or (B).

REFERENCE SIGNS LIST

1 Brazed lap joint
11 First steel sheet
111 End surface of first steel sheet
12 Second steel sheet
121 Surface of second steel sheet
13 Brazed zone
131 Brazing metal
132 Heat-affected zone
14 Zinc-based-plated layer
R Root portion
r Root
T Toe portion
t Toe
M Middle portion between root portion and toe portion
m Middle between root and toe
L Leg length on second steel sheet side
A1 Measurement point of average effective grain size of second steel sheet in root portion
A2 Measurement point of average effective grain size of second steel sheet in toe portion
A3 Measurement point of average effective grain size of second steel sheet at middle portion between root portion and toe portion

**Claims**

1. A brazed lap joint comprising:

   a first steel sheet and a second steel sheet, the first steel sheet and the second steel sheet being stacked;
   a zinc-based-plated layer, the zinc-based-plated layer being an overlapping surface of the first steel sheet and the second steel sheet; and
   a brazed zone including a brazing metal joining an end surface of the first steel sheet and a surface of the second steel sheet, and a heat-affected zone around the brazing metal, wherein
   a concentration of B atoms at a prior austenite grain boundary of the second steel sheet excluding the brazed zone is 2.0 atm% or more,
   an average effective grain size of the second steel sheet excluding the brazed zone is 7.0 $\mu$m or less,
   an average effective grain size of the second steel sheet in a root portion, a toe portion, and a middle portion between the root portion and the toe portion is 15.0 $\mu$m or less,
   a Vickers hardness of the brazing metal is 250 or less, and
   a leg length of the brazed lap joint on the second steel sheet side is 2.0 mm or more.

2. The brazed lap joint according to Claim 1, wherein
   a tensile strength of the second steel sheet is 980 MPa or more.

3. A method for manufacturing a brazed lap joint in which a zinc-based-plated layer is present on an overlapping surface and an end surface of a first steel sheet and a surface of a second steel sheet are brazed, the method comprising:

   bringing a metal platen whose inside is cooled by cooling water into close contact with the second steel sheet; and
   performing brazing using, as a filler metal, a brazing wire containing Cu as a main component and having a diameter of 0.8 to 1.4 mm, so that an amount of brazing heat input Q calculated by the following formula becomes 190 to 270 J/mm:

   $$Q = V \times I/v$$

   where V is a voltage in units of V, I is a current in units of A, and v is a brazing rate in units of mm/s,
   wherein a concentration of B atoms at a prior austenite grain boundary of the second steel sheet is 2.0 atm% or more, and an average effective grain size of the second steel sheet is 7.0 $\mu$m or less.

4. The method for manufacturing a brazed lap joint according to Claim 3, wherein
   a tensile strength of the second steel sheet is 980 MPa or more.

5. The method for manufacturing a brazed lap joint according to Claim 3 or 4, wherein the brazing is MIG brazing.

6. A vehicle component comprising the brazed lap joint according to Claim 1 or 2.

FIG. 1

FIG. 2

FIG. 3

FIG. 4

FIG. 5

FIG. 6

## INTERNATIONAL SEARCH REPORT

| International application No. |
| --- |
| **PCT/JP2023/045043** |

### A. CLASSIFICATION OF SUBJECT MATTER

***B23K 1/19***(2006.01)i; ***B23K 1/00***(2006.01)i; ***B23K 3/04***(2006.01)i; ***B23K 35/30***(2006.01)i; ***C22C 9/01***(2006.01)i;
***C22C 9/05***(2006.01)i; ***C22C 9/10***(2006.01)i
FI:  B23K1/19 J; B23K1/00 330Z; B23K3/04 X; B23K35/30 310C; C22C9/01; C22C9/05; C22C9/10

According to International Patent Classification (IPC) or to both national classification and IPC

### B. FIELDS SEARCHED

Minimum documentation searched (classification system followed by classification symbols)

B23K1/19; B23K1/00; B23K3/04; B23K35/30; C22C9/01; C22C9/05; C22C9/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2010-201434 A (NISSAN MOTOR CO., LTD.) 16 September 2010 (2010-09-16) entire text, all drawings | 1-6 |
| A | JP 2015-166099 A (NIPPON STEEL & SUMITOMO METAL CORPORATION) 24 September 2015 (2015-09-24) entire text, all drawings | 1-6 |
| A | JP 2011-218423 A (NIPPON STEEL CORPORATION) 04 November 2011 (2011-11-04) entire text, all drawings | 1-6 |
| A | JP 11-245084 A (NIPPON STEEL CORPORATION) 14 September 1999 (1999-09-14) entire text, all drawings | 1-6 |
| A | JP 2013-031878 A (JFE STEEL CORPORATION) 14 February 2013 (2013-02-14) entire text, all drawings | 1-6 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 January 2024** | **23 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2023/045043** |

| Patent document<br>cited in search report | | | Publication date<br>(day/month/year) | Patent family member(s) | Publication date<br>(day/month/year) |
| --- | --- | --- | --- | --- | --- |
| JP | 2010-201434 | A | 16 September 2010 | (Family: none) | |
| JP | 2015-166099 | A | 24 September 2015 | (Family: none) | |
| JP | 2011-218423 | A | 04 November 2011 | (Family: none) | |
| JP | 11-245084 | A | 14 September 1999 | (Family: none) | |
| JP | 2013-031878 | A | 14 February 2013 | (Family: none) | |

Form PCT/ISA/210 (patent family annex) (July 2022)

**REFERENCES CITED IN THE DESCRIPTION**

**Patent documents cited in the description**

- JP 2022206635 A
- JP 2009228079 A
- WO 2020162561 A
- WO 2021019947 A
- JP 2020179413 A

**Non-patent literature cited in the description**

- *METALLURGICAL AND MATERIALS TRANSACTIONS A*, vol. 45A, 1877-1888